# EUROPÄISCHE PATENTSCHRIFT

(11) **EP 0 504 607 B1**
(45) Veröffentlichungstag und Bekanntmachung des Hinweises auf die Patenterteilung: **08.03.1995**
(21) Anmeldenummer: 92102817.1
(22) Anmeldetag: 20.02.1992
(51) Int. Cl.: B62D 47/02

(54) **Gelenkfahrzeug, insbesondere Gelenkomnibus**
Articulated vehicle in particular articulated bus
Véhicule articulé, notamment autobus articulé

(30) Priorität: 21.03.1991 DE 4109317
(43) Veröffentlichungstag der Anmeldung: 23.09.1992
(73) Patentinhaber: MAN Nutzfahrzeuge Aktiengesellschaft, 80976 München (DE)
(72) Erfinder: Breitling, Ulrich, Dr., W-8000 München 60 (DE); Gusinde, Heinz, Dipl.-Ing. (FH), W-8061 Weichs (DE); Szabo, Zsolt, Dipl.-Ing. (TU), W-8000 München 40 (DE)

(56) Entgegenhaltungen:
- EP-A- 0 011 881
- EP-A- 0 378 802
- DE-A- 2 927 513
- DE-A- 3 340 446

## Beschreibung

Die Erfindung bezieht sich auf eine drehbare Verbindung zwischen dem Vorderwagen und dem Nachläufer eines Gelenkfahrzeuges, insbesondere Gelenkomnibusses, bestehend aus einer Knickschutzeinrichtung, einem Drehschemel und zwischen diesen vorgesehenem Drehkranz, wobei der Drehschemel den Verbindungsarm zwischen der Knickschutzeinrichtung und dem Nachläufer bildet und als tragende Struktur fest, aber drehbar mit dem Nachläufer verbunden ist.

Es sind Knickschutzeinrichtungen, auch Drehgelenkdämpfer, in den manigfaltigsten Ausführungen bei Gelenkomnibussen bekannt. Alle Ausführungen beziehen sich immer auf die Lösung ihrer speziellen Aufgabe, nämlich den Nachläufer gegen übermäßiges Einknicken, insbesondere auf glatten Fahrbahnen, zu schützen.

Aus der DE 33 40 446 ist ein Knickgelenk als drehbare Verbindung zwischen einem Vorderwagen und einem Nachläufer eines Gelenkfahrzeuges gemäß der eingangs genannten Vorrichtung bekannt, bei der die Knickschutzeinrichtung zwischen zwei Tragarmen des Vorderwagens angeordnet und von diesem getragen wird.

Der Erfindung liegt die Aufgabe zugrunde, eine kostengünstige, statisch und dynamisch stabile Drehverbindung zwischen dem Vorderwagen und dem Nachläufer eines Gelenkfahrzeuges zu schaffen.

Dies wird erfindungsgemäß dadurch erreicht, daß das Gehäuse der Knickschutzeinrichtung als primär tragende Struktur des Vorderwagens vorgesehen ist, daß die Knickschutzeinrichtung den Drehkranz (Kugeldrehkranz) zwischen Vorderwagen und Nachläufer aufweist. Solcherart weist das Gehäuse eine Doppelfunktion auf, zum einen dient es der Umhüllung und Lagerung der die Dämpfung bewirkenden Funktionsteile, zum anderen ist es tragendes Element der starken Nick- und Knickkräfte ausgesetzten Drehverbindung. Es können erhebliche Betriebs- und Anschlagkräfte über das als Kragträger ausgebildete Gehäuse, ohne großen konstruktiven Mehraufwand, übertragen werden.

Der erfindungsgemäße Flanschanschluß ist auf einfache Weise herstellbar und geeignet, die auftretenden Lasten sicher zu übertragen. Der Drehkranz ist nunmehr integraler Bestandteil der Knichschutzeinrichtung. Die Lagerringe des Wälzlagers sind auf den genau bearbeiteten Massivteilen des Gehäuses gefertigt. Somit gibt es keine Vorzüge, z. B. durch Schweißen, wie es in der konventionellen Gelenkbauweise der Fall ist. Der Verbindungsarm ist der Drehschemel. Es ist also kein zusätzliches Kraftübertragungsglied erforderlich, somit auch keine separate Montage und Befestigung.

Nach einem weiteren Merkmal der Erfindung ist die Knickschutzeinrichtung über einen stabilen vertikalen Flansch mittels einer Schraubenverbindung mit dem ebenen Endspant des Vorderwagengerippes verbunden. Es liegt solcherart eine einfache ebene Trennstelle vor, mit leichter Zugänglichkeit und ohne Einpaßprobleme.

Gemäß einer speziellen Ausbildung der Erfindung ist an dem Flansch der Knickschutzeinrichtung eine Zentrierungsplatte mit Drehgelenk für die Zentrierung des die seitlichen Faltenbälge im Wagenübergangsbereich tragenden Drehbalkens vorgesehen. Auf diese Weise findet auch der Drehbalken bei guter Zugänglichkeit und einfacher Montage eine sichere Abstützung an dem massiv ausgebildeten Flansch der Knickschutzeinrichtung.

Nach einem anderen Merkmal der Erfindung weist der Flansch der Knickschutzeinrichtung einen mittleren tiefversenkten Durchgang auf. Der Drehbalken ist mit Höhenabstand zum Drehschemel angeordnet. Der so entstandene Mittelgang ist für die Verlegung der Versorgungsleitungen vorgesehen. Durch diese bestmögliche Verlegung von Versorgungsleitungen zwischen dem Vorderwagen und dem Nachläufer erfolgt nur eine minimale Verschiebung der Versorgungsleitungen bei relativer Knick- und Nickbewegung der Gelenkbusteile.

Die Erfindung ist in einem Ausführungsbeispiel dargestellt.

Es zeigen:

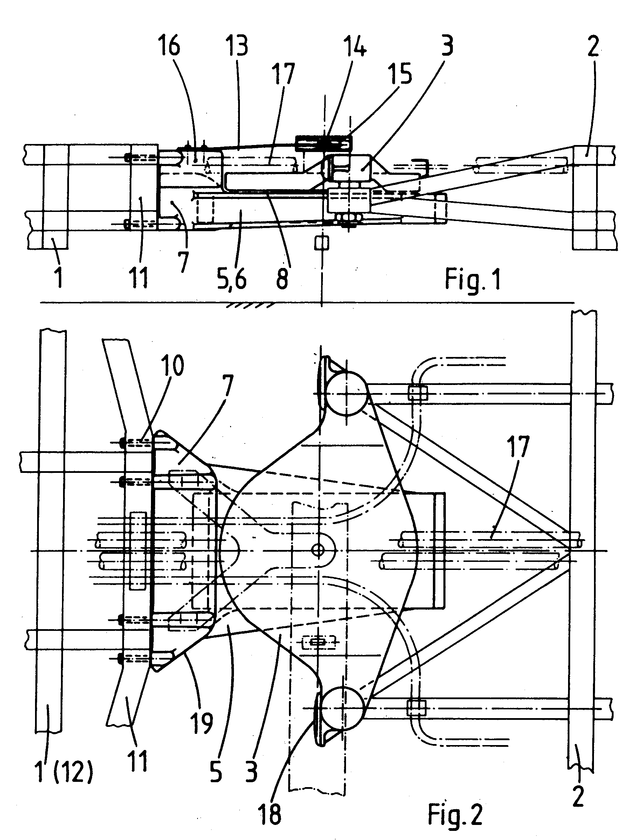

- Fig. 1: eine Seitenansicht der Verbindung zwischen Vorderwagen und Nachläufer,
- Fig. 2: eine Draufsicht der Verbindung zwischen Vorderwagen und Nachläufer.

Das Schlußteil des Vorderwagens 1 wird von einem Vorderwagengerippe 12 gebildet, das einen Endspant 11 aufweist. Am Endspant 11 ist die Knickschutzeinrichtung 5 über einen Flansch 7 mittels Schrauben 10 befestigt. Die Knickschutzeinrichtung 5 weist ein massiv ausgebildetes Gehäuse 6, vorzugsweise aus Sphäroguß oder Stahlguß, auf, das an seinem einen Ende mit einem vertikal auskragenden Flansch 7 versehen ist. Flansch 7 und Gehäuse 6 sind so ausgebildet, daß sie nicht nur zur Lagerung und Umhüllung der die Dämpfungsfunktion bewirkenden Teile dienen, vielmehr sind sie extrem massiv ausgebildet, so daß sie eine tragende Struktur für den Anschluß des Nachläufers 2 bilden. Die Knickschutzeinrichtung 5 weist auch einheitlich einen Drehkranz 8 (Kugeldrehkranz) zwischen dem Vorderwagen 1 und dem Nachläufer 2 auf. Dabei ist als Verbindungsarm der z.B. als Drehdämpfer ausgebildeten Knickschutzeinrichtung 5 der Drehschemel 3 in tragender Strukturbauweise vorgesehen. Auf dem Kopf des Flansches 7 ist eine gabelförmig ausgebildete Zentrierungsplatte 13 mittels Schrauben befestigt. Die Zentrierungsplatte 13 zentriert über Drehgelenk 14 den die Faltenbälge im Wagenübergangsbereich tragenden Drehbalken 15. Am Flansch 7 der Knickschutzeinrichtung 5 ist ein mittlerer, tiefversenkter Durchgang 16 vorgesehen. Der Drehbalken 15 ist mit Höhenabstand zum Drehschemel 3 angeordnet. Der so entstandene Mittelgang dient zur Verlegung der Versorgungsleitungen 17. Auf diese Weise ergeben sich nur minimale Verschiebungen bei relativer Knick- und Nickbewegung der Gelenkbusteile, so daß die Versorgungsleitungen nur einem geringen Verschleiß ausgesetzt sind. Der Drehschemel 3 weist an den Enden seiner Hebelarme Anschläge 18 auf, die bei Auftreffen auf die Anschlagflächen 19 des Gehäuses 6 den max. Knickwinkel zwischen Vorderwagen und Nachläufer begrenzen.

## Patentansprüche

1. Drehbare Verbindung zwischen dem Vorderwagen (1) und dem Nachläufer (2) eines Gelenkfahrzeuges, bestehend aus einer in einem Gehäuse (6) vorgesehenen Knickschutzeinrichtung (5), einem Drehschemel und einem zwischen diesen beiden vorgesehenen Drehkranz, wobei der Drehschemel (3) den Verbindungsarm zwischen der Knickschutzeinrichtung und dem Nachläufer bildet und als tragende Struktur fest, aber drehbar mit dem Nachläufer verbunden ist, dadurch gekennzeichnet, daß das Gehäuse (6) der Knickschutzeinrichtung (5) als primär tragende Struktur des Vorderwagens (1) vorgesehen ist und daß die Knickschutzeinrichtung den Drehkranz (8) zwischen Vorderwagen (1) und Nachläufer (2) aufweist.

2. Drehbare Verbindung nach Anspruch 1, dadurch gekennzeichnet, daß die Knickschutzeinrichtung (5) über einen stabilen vertikalen Flansch (7) mittels einer Schraubverbindung (10) mit dem ebenen Endspant (11) des Vorderwagengerippes (12) verbunden ist.

3. Drehbare Verbindung nach Anspruch 1 oder 2, dadurch gekennzeichnet, daß an dem Flansch (7) der Knickschutzeinrichtung (5) eine Zentrierungsplatte (13) mit Drehgelenk (14) für die Aufnahme des die seitlichen Faltenbälge im Wagenübergangsbereich tragenden Drehbalkens (15) vorgesehen ist.

4. Drehbare Verbindung nach den Ansprüchen 1 bis 3, dadurch gekennzeichnet, daß der Flansch (7) der Knickschutzeinrichtung (5) einen mittleren, tiefversenkten Durchgang (16) aufweist, der Drehbalken (15) mit Höhenabstand zum Drehschemel (3) angeordnet ist und der so entstandene Mittelgang für die Verlegung der Versorgungsleitungen (17) vorgesehen ist.

5. Drehbare Verbindung nach einem oder mehreren der Ansprüche 1 bis 4, dadurch gekennzeichnet, daß an dem Drehschemel (3) ein Anschlag (18) vorgesehen ist, der bei Erreichen eines bestimmten Knickwinkels mit einer Anschlagfläche (19) des Gehäuses (6) der Knickschutzeinrichtung (5) in Kontakt kommt.

## Claims

1. Slewable connection between the forebody (1) and afterbody (2) of an articulated vehicle, which connection consists of an anti-jackknife device (5) located in a housing (6), a pivot plate and a turntable located between these two, the pivot plate (3) forming the connection arm between the anti-jackknife device and the afterbody and, as a supporting structure, being firmly but slewably connected with the afterbody, characterised in that the housing (6) of the anti-jackknife device (5) is provided as the primarily supporting structure of the forebody (1) and that the anti-jackknife device is equipped with the turntable (8) between forebody (1) and afterbody (2).

2. Slewable connection according to Claim 1, characterised in that the anti-jackknife device (5) is connected with the level final cross member (11) of the forebody frame (12) via a stable vertical flange (7) by means of a screwed connection (10).

3. Slewable connection according to Claim 1 or 2, characterised in that a centring plate (13) with swivel joint (14) is provided at the flange (7) of the anti-jackknife device (5) for holding the slewing beam (15) carrying the lateral concertina sections in the vehicle transition area.

4. Slewable connection according to the Claims 1 to 3, characterised in that the flange (7) of the anti-jackknife device (5) is provided with a centre passage (16) located at a deep position, the slewing beam (15) is located at a vertical distance to the pivot plate (3) and that the centre passage thus created is provided for routing the supply lines (17).

5. Slewable connection according to one or several of the Claims 1 to 4, characterised in that the pivot plate (3) is equipped with a stop (18) which, on reaching a certain jackknife angle, comes into contact with a stop face (19) on the housing (6) of the anti-jackknife device (5).

## Revendications

1. Liaison articulée entre le véhicule avant (1) et le véhicule suiveur (2) d'un véhicule articulé, se composant d'une installation de protection au flambage (5) logée dans un caisson (6), d'un tambour de rotation et d'une couronne de rotation prévue entre ces deux organes, le tambour de rotation (3) formant le bras de liaison entre l'installation de protection au flambage et le véhicule suiveur en étant relié comme structure portante, solidairement mais permettant une rotation Du véhicule suiveur, liaison caractérisée en ce que le caisson (6) de l'installation de protection au flambage (5) est une structure portante primaire du véhicule avant (1) et l'installation de protection au flambage comporte la couronne de rotation (8) entre le véhicule avant (1) et le véhicule arrière (2).

2. Liaison articulée selon la revendication 1, caractérisée en ce que l'installation de protection au flambage (5) est reliée, par une bride verticale solide (7) à l'aide d'une liaison vissée (10), à une membrure d'extrémité (11), plane, de l'ossature (12) du véhicule avant.

3. Liaison articulée selon la revendication 2, caractérisée en ce que la bride (7) de l'installation de protection au flambage (5) comporte une plaque de centrage (13) avec une articulation (14) pour recevoir la poutre de rotation (15) qui porte les soufflets latéraux dans la zone intermédiaire des véhicules.

4. Liaison articulée selon les revendications 1 à 3, caractérisée en ce que la bride (7) de l'installation de protection au flambage (5) comporte un passage central (16), approfondi, et la poutre de rotation (15) est à une certaine hauteur au-dessus du tambour tournant (3) pour que le couloir central ainsi formé soit disponible pour recevoir les conduites d'alimentation (17).

5. Liaison articulée selon une ou plusieurs des revendications 1 à 4, caractérisé en ce que le tambour tournant (3) comporte une butée (18) qui, lorsqu'on atteint un angle de flambage déterminé, vient en contact avec une surface de butée (19) du caisson (6) de l'installation de protection au flambage (5).
